# EUROPEAN PATENT SPECIFICATION

(11) **EP 4 349 606 B1**
(45) Date of publication and mention of the grant of the patent: **03.12.2025**
(21) Application number: 23201449.8
(22) Date of filing: 03.10.2023
(51) Int. Cl.: B32B 38/16, B41M 7/00, B32B 38/14, B41J 11/00, B31B 50/10

(54) **METHOD FOR MANUFACTURING A LAMINATED PACKAGING MATERIAL WEB**
VERFAHREN ZUR HERSTELLUNG EINER LAMINIERTEN VERPACKUNGSMATERIALBAHN
PROCÉDÉ DE FABRICATION D'UNE BANDE DE MATÉRIAU D'EMBALLAGE STRATIFIÉE

(30) Priority: 03.10.2022 EP 22199398
(43) Date of publication of application: 10.04.2024
(73) Proprietor: Tetra Laval Holdings & Finance S.A., 1009 Pully (CH)
(72) Inventor: OLSSON, Sverker, 221 86 Lund (SE); ERIKSON, Fredrik, 221 86 Lund (SE)
(74) Representative: Tetra Pak Patent Attorneys

(56) References cited:
- EP-B1- 3 459 726
- US-B2- 10 744 794
- US-B2- 11 001 028

## Description

### Technical Field

The invention relates to a method for manufacturing a laminated packaging material web for liquid food packaging containers, and to a converting unit.

### Background Art

Packaging containers of the single use disposable type for liquid foods are often produced from a laminated packaging material. The laminated packaging material is produced as a continuous web, which is either used in a roll-fed filling machine or cut into separate blanks for use in a blank-fed packaging machine.

The laminated packaging material is produced using a converting procedure in which multiple materials are joined and processed to form the ready-to-use web of laminated packaging material.

During the converting process a paperboard layer, forming the core layer of the laminated packaging material, may be digitally printed on the outside (i.e. the side intended as the exterior side of the laminated packaging material) for example by ink-jet printing, dried, and laminated in between sealable layers. Optionally, the paperboard layer may be pre-coated before the printing, and/or already be bonded to one or more layers.

During the entire converting process, it is important to maintain a desired moisture level of the paperboard layer; not only for ensuring optimum performance of various converting processes, but also to control the desired properties of the final packaging container.

A suggested technique for drying the paperboard layer after digital printing using water-based inks, such as pigmented water-based inks, is infrared radiation. While this technique allows for a fast drying, it has been observed that more powerful drying will also dry the paperboard layer, i.e. the moisture content of the paperboard layer will be reduced. The moisture loss in an area of the paperboard layer will vary with the printed design and in particular be related to the color printed on the area. For the liquid food packaging materials, printed inks may not be covered by a coating, like a varnish, after printing. They are laminated by, for example, polymer layers to protect the printing after dried. Therefore, over drying, especially of unprinted, surfaces may be hard to avoid while drying the ink printed areas. Thus, even drying becomes hard to provide. A low paperboard moisture content will affect the converting process negatively, especially when the paperboard layer is creased prior to lamination. If the moisture content of the paperboard layer is reduced to a certain level, the paperboard layer will crack rather than bend, potentially reducing the quality of the final laminated packaging material web and the packaging containers produced from the laminated packaging material web. On the other hand, if the printed design is not sufficiently dried, it may result in defects related to scuffing or smearing of the printed color pattern of the décor layer. Thus, there is a need in the art for improvements of manufacturing techniques for laminated packaging material webs, especially with regards to ink drying.

US 11 001 028 B2 discloses an apparatus according to the background art.

### Summary

It is an object of the invention to at least partly overcome one or more of the above-identified limitations of the prior art. In particular, it is an object to provide a reliable and efficient method for manufacturing a laminated packaging material web with a maintained moisture level of the paperboard layer.

To solve these objects a continuous in-line method for manufacturing a laminated packaging material web for liquid food packaging containers is provided. The method comprises ink-jet printing a décor layer on a paperboard layer, drying the décor layer by exposing the paperboard layer to infrared radiation and a flow of hot air, controlling the moisture content of the paperboard layer by adjusting the ratio between the power, spectral emission, radiation intensity, or time of exposure of the infrared radiation and the flow of hot air, and laminating at least a further layer to the printed paperboard layer.

The highly probable paperboard layer is one used for a liquid food packaging. In other words, the highly probable laminated packaging material web is a laminated liquid food packaging material web, alternatively named as liquid packaging board.

The paperboard used in the liquid packaging board, in general, has a face, called top surface, optimized for printing, and other face, back surface, having water repellent properties to withstand water absorption from outer environment. Therefore, the paperboard is not suitable to moisten from back surface, if needed like being over-dried after drying. For a paperboard printed by water-based inks also can not be moisten after drying from top surface to avoid resolving the pointed ink. Re-moistening may also be not preferred for liquid food packaging material production due to food safety requirements.

In one embodiment, printing may be performed up to more than 200%TAC (Total Area Coverage) with CMYK (cyan, magenta, yellow, and black) combinations. These printings can not be dried by infrared only without overheating the black coloured areas. That causes over drying the paperboard areas, and leading uneven drying and moisture content in the paperboard.

In one embodiment, the ink may have not only water but also some organic volatiles. The water and volatile organic content combination may lead higher boiling point to dry the ink. Thus, it may need higher drying energy that may lead over drying of the paperboard, if only IR is employed. The method is advantageous in that the moisture content of the paperboard layer is substantially maintained. The moisture content of the paperboard layer may for instance be 4% or more, between 5% and 10%, or preferably between 5% and 8.5%.

The method may further comprise flexographic printing, or other printing techniques, and the décor layer may hence be obtained by ink-jet printing only, or by a hybrid approach combining two or more printing techniques. In other words, the décor layer may be ink-jet printed and flexography printed.

The method may further comprise applying a print substrate layer to said paperboard layer prior to ink-jet printing the décor layer.

Applying a print substrate layer may for instance comprise coating the paperboard layer with a pre-coating, or priming the paperboard layer by a plasma treatment to form a print substrate layer on the surface of the paperboard layer, or applying a surface conditioner, thereby changing the topology or properties relating to static electricity. The print substrate layer may fully cover the paperboard layer, it may cover only the areas to be covered by the décor layer, or they may cover an intermediately sized area of the paperboard layer.

In an embodiment, the invention may be more beneficial when the paperboard layer needs to be dried as quick as possible. For instance, if the paperboard has a print substrate layer that avoids migration of the solvent of the ink, which is most likely water-based ink, by the paperboard, then drying as quick as possible without over drying the packaging material may be more beneficial. In other words, if the paperboard has a print substrate layer that can keep almost all solvent of the ink, which is most likely water-based ink, printed on the print substrate layer, then drying as quick as possible without over drying the packaging material may be more beneficial.

In an embodiment, the paperboard may comprise a printable coating, for instance a white pigment and clay-coating as the print substrate layer. Such a clay coating will form a water repellant surface on the paperboard layer meaning that the solvent of the ink cannot migrate be absorbed into the paperboard fibrous layer. This requires an increased drying power, as it is important to dry the ink fast before being subjected to further downstream processes.

In an embodiment, the print substrate layer may be a clay-coating that is also primed upstream of ink-jet printing.

In an embodiment, the print substrate layer may be provided on the paperboard layer before the ink-jet printing on the same production site; and/or well before, for example in another production site, so on the site, where the ink-jet printing is realized, no application of the print substrate layer is realized.

In one embodiment, the method further comprises providing a crease line pattern to said paperboard layer. As an example, the crease line pattern may be repeated in a machine direction.

In a possible embodiment, a crease line may be provided upstream and/or downstream of ink-jet printing.

Preferably, the paperboard layer has a thickness of minimum 90 µm, and/or a weight of minimum 65 gsm.

The paperboard layer may be an uncoated paperboard, or a paperboard laminated with one or more layers, for example polymer layers, before ink-jet printing and/or application of the print substrate layer.

The paperboard layer may be transported along the machine direction at a substantially constant speed, for example on 200 m/min or faster.

Drying the décor layer further comprises controlling the moisture content of the paperboard layer by adjusting the ratio between the infrared radiation and the flow of hot air. This is beneficial as it allows for precise control of the décor layer and the paperboard layer, and facilitates a maintained moisture content at a minimized drying time.

Drying the décor layer may further comprise controlling the moisture content of the paperboard layer by adjusting the temperature of the flow of hot air.

The hot air dryers may have a slot velocity 45-85 m/s and air temperature 55-80°C. The humidity in the hot air fed by the hot air dryers to dry the decor layer may be controlled, preferably inline.

In one embodiment, the temperature of the paperboard may be controlled, preferably inline. If the printed and laminated packaging material has more than one lane, each one of the lanes that will be used to feed a liquid food filling machine may be controlled individually during the printing and/or drying and/or downstream of drying to avoid having temperature gradients.

In one embodiment, controlling the moisture level comprises determining a drying time, and determining the ratio between the infrared radiation and the flow of hot air by minimizing the amount of infrared radiation while still ensuring complete drying within the drying time. By this, issues related to moisture loss in the paperboard layer is minimized.

The drying the décor layer may be performed by exposing an area of the paperboard layer to infrared radiation, and subsequently exposing the same area of the paperboard layer to the flow of hot air. As an example, an area of the paperboard layer may be exposed to infrared radiation until a determined moisture level of the paperboard is reached, and the remaining drying of the décor layer may be carried out by the flow of hot air. By this, time efficiency of the method is ensured while still ensuring a desired level of moisture content in the paperboard layer.

The infrared radiation may have a spectral emission within 0.4 µm - 4 µm. In other words, the infrared radiation may be a near-infrared radiation, a short-wave infrared radiation, a mid-wave infrared radiation, or a radiation in several infrared regions.

In one embodiment, the method of printing and drying of the laminated packaging material may be performed roll-to-roll, meaning that a roll of paperboard may be unrolled upstream of printing, and rolled downstream of laminating with a further layer. Rolling of laminated packaging material causes friction and stretching forces on the printings, so the printings should be dried properly while not causing over drying of the paperboard. Additionally, if crease line patterns are formed on the laminated packaging material, these patterns should withstand against the friction and stretching forces by the help of maintained moisture content in the paperboard. A rolled packaging material web may be transported in a facilitated manner to a further step, like filling a product inside the packaging material web, probably a liquid food.

The order of method steps may be not limiting for the invention. Various order of the mentioned steps may be used by the skilled person as long as being technically possible to achieve the advantage of maintaining substantially the moisture content of the paperboard layer by IR drying and hot air drying.

Another aspect of the invention refers to a converting unit configured to manufacture a laminated packaging material web for liquid food packaging containers. The converting unit may be configured to perform the continuous in-line method for manufacturing a laminated packaging material web described herein and therefor implies all aspects disclosed with regard to that method.

The converting unit comprises an ink-jet printer configured to print a décor layer on the paperboard layer, a drying station configured to dry the décor layer by exposing the paperboard layer to infrared radiation and a flow of hot air, configured to control the moisture content of the paperboard layer by adjusting the ratio between the power, spectral emission, radiation intensity, or time of exposure of the infrared radiation and the flow of hot air, and at least one lamination station configured to laminate at least a further layer to the printed paperboard layer.

In an embodiment, the converting unit may comprise a creasing station configured to provide a crease line pattern to the paperboard layer.

The comprised stations may be arranged in the following order, upstream to downstream: ink-jet printer, drying station, creasing station, lamination station.

It is also possible to have the creasing station upstream of the ink-jet printer; or to have more than one creasing station located on both downstream and upstream of the ink-jet printer; or having a combined unit for the ink-jet printer and the creasing station that allows creasing before and/or after the printing.

The drying station may comprise a hot air dryer distinct from an infrared dryer, and the hot air dryer may be arranged downstream the infrared dryer. By this, time efficiency of the method is ensured, while minimizing moisture loss in the paperboard layer and/or ensuring a desired level of moisture content in the paperboard layer.

In one embodiment, the converting unit further comprises a feeding unit configured to continuously forward the paperboard layer at a constant speed.

The converting unit may further comprise a print substrate station configured to apply a print substrate layer to prepare the paperboard layer before being printed by the ink-jet printer. As mentioned above, applying a print substrate layer may comprise coating the paperboard layer with a pre-coating, for instance a clay coating or a primed clay coating, or priming the paperboard layer by a plasma treatment to form the print substrate layer on the surface of the paperboard layer, or applying a surface conditioner or in other ways modify the properties of a surface of the paperboard layer. The converting unit may further comprise a second drying station for drying the print substrate layer.

The order of stations steps may be not limiting for the invention. Various order of the mentioned stations may be used by the skilled person as long as being technically possible to achieve the advantage of maintaining substantially the moisture content of the paperboard layer by IR drying and hot air drying.

In one embodiment, the converting unit may be a roll-to-roll unit, meaning that a roll of paperboard may be unrolled upstream of printing, and rolled downstream of laminating with a further layer. Rolling of laminated packaging material causes friction and stretching forces on the printings, so the printings should be dried properly while not causing over drying of the paperboard. Additionally, if crease line patterns are formed on the laminated packaging material, these patterns should withstand against the friction and stretching forces by the help of maintained moisture content in the paperboard. A rolled packaging material web may be transported in a facilitated manner to a further step, like filling a product inside the packaging material web, probably a liquid food.

A laminated packaging material web, that is not a claimed invention may be obtained from the converting unit and/or by the method steps described herein. The laminated packaging material web comprises a paperboard layer and an ink-jet printed décor layer, and at least a further layer laminated to the paperboard layer. The moisture content of the paperboard layer is 4% or more.

The moisture content of the paperboard layer may be between 5% and 10%. More preferably, the moisture content may be between 5% and 8.5%.

As an example, the moisture content of the paperboard layer may be between 6% and 8.5% after ink-jet printing the décor layer, and in the final laminated packaging material web, the moisture content of the paperboard layer may be substantially the same, or slightly lower. This implies that the paperboard layer has not suffered any significant moisture loss, at least of a magnitude that would result in any major defects of the laminated packaging material web.

The laminated packaging material may have a crease line pattern, and, for example, the crease line pattern may be cyclically repeated in a machine direction.

All embodiments of all aspects of the invention may be combined and be suitable for each other, if the contrary is not stated above or below.

Still other objectives, features, aspects, and advantages of the invention will appear from the following detailed description as well as from the drawings.

### Brief Description of the Drawings

Embodiments of the invention will now be described, by way of example, with reference to the accompanying schematic drawings, in which
Fig. 1 is a flow chart of a method for manufacturing a laminated packaging material web according to an embodiment.
Fig. 2 is a cross-sectional view of a laminated packaging material web according to an embodiment that is disclosed but is not a claimed invention.
Fig. 3 is a schematic view of a converting unit according to an embodiment.
Fig. 4 is a schematic view of a drying station according to an embodiment.

### Detailed Description

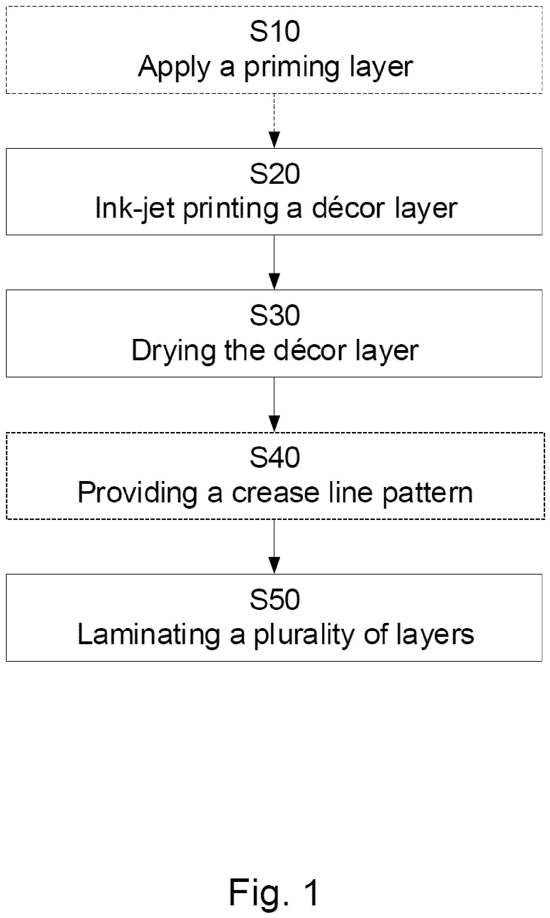

With reference to Fig. 1 an embodiment of a continuous in-line method for manufacturing a laminated packaging material web 100 is illustrated. The method comprises ink-jet printing S20 a décor layer 150 on a paperboard layer 130. The paperboard layer 130 may comprise paper, paperboard or other cellulose-based material. Ink-jet printing is a type of digital printing or computer printing. During ink-jet printing, a digital image is recreated by propelling droplets of ink onto a substrate, such as a paperboard layer 130 or a print substrate layer 140 which will be further discussed herein. The ink used may comprise a solvent and color pigments or dyes. The solvent may comprise water and volatile organic content, for instance glycol. The method may further comprise other printing techniques, such as flexographic printing, and the décor layer 150 may, hence, be obtained by ink-jet printing S20 only, or by a hybrid approach combining two or more printing techniques. In other words, the décor layer 150 may be ink-jet printed and flexography printed. Ink used for ink-jet printing S20 may comprise a higher ratio of solvent relative color pigment than ink used for flexographic printing. For instance, ink-jet ink may comprise approximately 4 times more water content than flexographic ink. Further, the total amount of ink laid down on the paperboard later 130 is several times more for ink-jet printing as compared to flexographic printing. Hence, for ink-jet printing, it is even more important to provide a fast drying process that does not reduce the moisture content of the paperboard layer 130.

The method further comprises drying S30 the décor layer 150 by exposing the paperboard layer 130 to infrared radiation IR and a flow of hot air HA. Infrared drying is an indirect method of drying that does not rely on an intermediate agent such as air or water. Instead, the infrared radiation, hereinafter IR, radiates onto the décor layer 150, where it to some extent will be absorbed by molecules within the ink, causing solvent of the ink to evaporate from the layer 150. The intensity of the IR affects the level of transmission through the décor layer 150 and may be adjusted. By the drying step S30 comprising IR, a more reliable process is ensured, which is unaffected by an air boundary layer. Infrared drying further facilitates a more time efficient process, as the energy transfer process is very efficient. The rapid removal of solvent from the ink may further create a brighter and more vibrant décor layer 150.

The drying process may be controlled by selecting the wavelength, intensity, and exposure time of the IR radiation. Ideally, the IR radiation should be selected such that a minimum amount of energy is transmitted to the paperboard layer 130 and absorbed by its water molecules, thereby reducing the moisture content loss of the paperboard layer 130. However, this alone is not enough to keep desired moisture content of the paperboard.

It is critical to dry the décor layer 150 before carrying out further method steps to manufacture the laminated packaging material web 100, not least to avoid defects resulting from scuffing or smearing. A drying process relying solely on IR may however suffer from drawbacks relating to the reduction of moisture content in the printed paperboard layer 130. High radiation intensity going through the layers 130, 150 does not only remove moisture from the ink of the décor layer 150, but also from the cellulose-based paperboard layer 130, and may result in a variety of issues regarding performance of the laminated packaging material web 100. A laminated packaging material web 100 comprising a paperboard layer 130 with a reduced moisture content may suffer from problems relating to cracks (especially in areas where multiple crease lines intersect), and delamination of the laminated packaging material 100, as well as the integrity of the final packaging container. Further, an exclusively IR based drying process may be energy consuming and costly in terms of the required equipment. On the other hand, drying the décor layer 150 by hot air only would be very time consuming and result in products with unreliable performance.

Hot air drying is a simple and inexpensive technique in which ambient air is heated and the heat is transferred from the flow of hot air to a printed ink by convection, and evaporated solvent from the ink is transported to the air also by convection. Use of ambient air means that drying results will be unpredictable and vary depending on prevailing weather conditions. A drying process exclusively based on hot air would be inefficient and time consuming, and significantly lowering the yield of a manufacturing process. In the method illustrated in Fig. 1, a combination of IR and hot air is used to dry S30 the décor layer 150.

The drying step S30 of the method further comprises controlling the moisture content of the paperboard layer 130 by adjusting the ratio between the IR and the flow of hot air HA. Alternatively or additionally, drying S30 the décor layer 150 may further comprise a step of controlling the moisture content of the paperboard layer 130 by adjusting the temperature of the flow of hot air HA. In other words, controlling the moisture content of the paperboard layer 130 is done by adjusting the power, spectral emission, radiation intensity, or time of exposure of the IR, and/or by adjusting the flow of the hot air. Controlling the moisture level may comprise determining a desired drying time, and determining the ratio between the infrared radiation IR and the flow of hot air HA by minimizing the amount of infrared radiation IR while still ensuring complete drying within the desired drying time. The desired drying time may be defined as the total time during which the paperboard layer 130 is arranged at a certain part of a production line, such as a drying station 230 or a section extending between the inkjet printing location and further converting equipment arranged downstream the drying station.

The desired drying time is thus dependent on the running speed of the converting unit, as well as on the distance between the different stations of the converting unit. A preferred converting speed is 200 m/min or higher.

Drying S30 the décor layer 150 may be performed by exposing an area of the paperboard layer 130 to infrared radiation IR, and subsequently exposing the same area of the paperboard layer 130 to the flow of hot air HA. Alternatively, a first area of the paperboard layer 130 may first be exposed to IR, and a second area of the paperboard layer 130, larger than, and at least partly comprising the first area, may then be exposed to the flow of hot air HA. This means that IR radiation may only be provided locally to certain areas of the décor layer 150.

The method may comprise additional print substrate layer application, printing and/or drying steps. For instance, a surface treatment may be applied to the paperboard layer 130 which then is printed using flexographic printing, and dried by exposing the printed area to infrared radiation IR and/or hot air HA. A print substrate layer 140 may subsequently be applied S10 to the paperboard layer 130, and the print substrate layer 140 may be dried by IR and/or hot air HA. Then, a décor layer 140 may be ink-jet printed S20 on the print substrate layer 140 and dried S30 by exposing the paperboard layer 130 to infrared radiation IR and a flow of hot air HA. The paperboard layer 130 may be further printed using flexographic printing, and dried again.

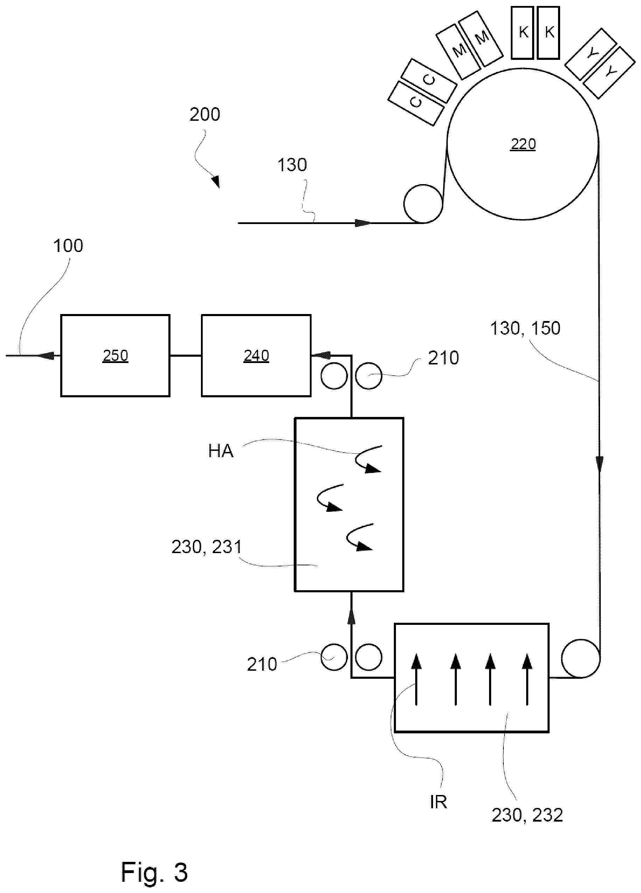

As illustrated in Fig. 1, the method further comprises providing S40 a crease line pattern to said paperboard layer 130. The crease line pattern facilitates the formation of a packaging container from the laminated packaging material web 100, not illustrated. The crease line pattern may be repeated in a machine direction. The machine direction may be defined as the direction parallel to the movement of the paperboard layer 130 through a manufacturing equipment such as a converting unit 200, or as the circumferential direction of a roll of paper used for providing the paperboard layer 130. The laminate packaging material web 100 may have a machine direction, and a transverse direction, defined in perpendicular direction to the machine direction. The dimension of the laminate packaging material web in the machine direction may be substantially larger than in the transverse direction. During the method, the paperboard layer 130 may be transported along the machine direction as defined above at a substantially constant speed. An example path of the paperboard layer 130 through a converting unit 200 is illustrated in Fig. 3 as a continuous line with arrowheads pointing in the machine direction.

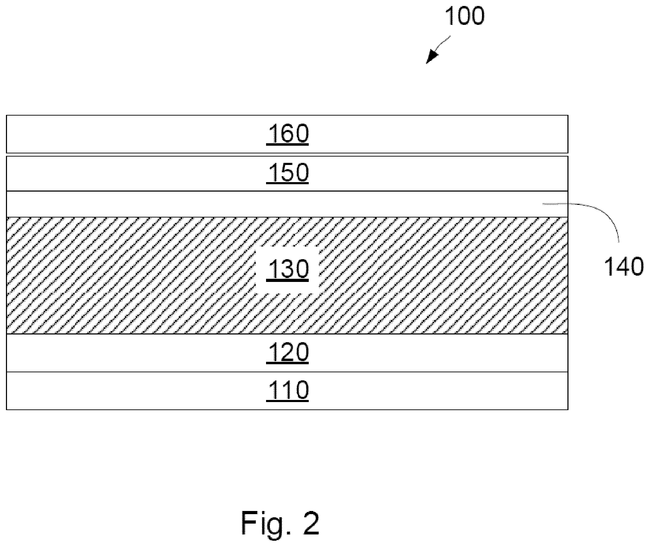

The method further comprises laminating S50 at least a further layer 110, 120, 160 to the printed and creased paperboard layer 130. A cross-section of an example of a laminated packaging material web comprising a paperboard layer 130, a décor layer 150 and at least a further layer 110, 120, 160 is illustrated in Fig. 2. The laminated packaging material web 100 illustrated in the figure comprises two sealable layers 110, 160, arranged on the outside of the laminated packaging material web 100, topmost in the figure, to constitute the outside or exterior of a packaging container formed from the laminated packaging material web 100, and the inside of the laminated packaging material web 100, lowermost in the figure, to be in direct contact with a filled food product in the packaging container. The sealable layers 110, 160 are preferably liquid tight. The sealable layers 110, 160 may be heat sealable or comprise a thermoplastic material. Fig. 2 further illustrates a barrier layer 120, laminated to the paperboard layer 130, preferably on the inside, as defined above. The barrier layer 120 may comprise any barrier material that is suitable to maintain a food safe environment for the packaged liquid food product. This covers metals, such as aluminium foil, polymer materials, such as ethylene vinyl alcohol copolymers, EVOH, or polyamides, PA, polysaccharides such as starch or fibrillar or crystalline cellulose, polymer--based film substrates being provided with a barrier coating; the barrier coating being selected from metals, metal oxides, inorganic oxides, other inorganic compounds or carbon-based coatings, such as amorphous diamond-like carbon, DLC, coatings. The barrier layer 120 may be a cellulose based material and/or a composite material or multilayer coating material, for example comprising a non-metal material such as plastic, paper or cellulose-based material and a metal material for instance comprising Aluminum.

Fig. 2 further illustrates a print substrate layer 140 arranged between the paperboard layer 130 and the décor layer 150. The print substrate layer 140 may as shown in Fig. 1 have been applied S10 to the paperboard layer 130 prior to ink-jet printing S20 the décor layer 130. Applying S10 a print substrate layer 140 may for instance comprise coating the paperboard layer 130 with a pre-coating, priming the paperboard layer 130 by a plasma treatment, flame treatment, corona treatment or applying a surface conditioner, thereby conditioning the surface, for instance like, changing the topology, surface tension, wettability, properties relating to static electricity, or other surface properties. In specific embodiments, the print substrate layer 140 may be a clay coating or a primed clay coating, for instance, to change surface properties of the paperboard. Typically, the clay coating will form a water repellant surface on the paperboard layer meaning that the solvent of the ink cannot migrate into the paperboard layer. This requires an increased drying power, as it is important to dry the ink fast before being subjected to further downstream processes. The print substrate layer 140 may comprise a polymer film or a metalized polymer film. These alternatives also form a water repellant surface on the paperboard layer meaning that the solvent of the ink cannot migrate into the paperboard layer. This requires an increased drying power, as it is important to dry the ink fast before being subjected to further downstream processes. The print substrate layer 140 may fully cover the paperboard layer 130, it may cover only the areas to be covered by the décor layer 150, or it may cover in intermediately sized area of the paperboard layer 130. The method may further comprise drying, if needed, the print substrate layer 140 prior to printing the décor layer 150. Although not explicitly illustrated in Fig. 2, the paperboard layer 130 of the laminated packaging material web 100 will after the method of Fig. 1 have a crease line pattern, preferably a crease line pattern being cyclically repeated in the machine direction, and the moisture content will be 4% or more, between 5% and 10%, or, preferably, between 5% and 8.5%. The moisture content of the paperboard layer 130 may, after the method described above, not be significantly lower than the moisture content provided before the steps of the method is carried out. As an example, the provided moisture content of the paperboard layer 130 may be between 6% and 8.5% before the step of drying S30 the décor layer 150 on the paperboard layer 130. This implies that the paperboard layer 130 of the laminated packaging material web 100 has not suffered moisture losses of a magnitude that would result in any defects of the paperboard layer 130, and that quality of the final product is ensured.

Turning now to Fig. 3, a converting unit 200 configured to manufacture a laminated packaging material web 100 is illustrated in a schematic view. The converting unit 200 may be configured to perform the method as described above and all aspects disclosed with regard to the method may be implied also for the converting unit 200, as well as the other way around. The converting unit 200 comprises an ink-jet printer 220 configured to print a décor layer 150 on the paperboard layer 130, in the figure illustrated as a support cylinder and a plurality of printer heads for cyan C, magenta M, yellow Y and black K. It should be noted that the exact configuration of the ink-jet printer 220 may be different depending on the particular application; for example, the ink-jet printer 220 may comprise multiple printer heads arranged in the machine direction and/or the transverse direction in order to cover the entire width of the paperboard layer 130. The converting unit 200 further comprises a drying station 230 configured to dry the décor layer 150 by exposing the paperboard layer 130 to infrared radiation IR and a flow of hot air HA. The drying station 230 may comprise a hot air dryer 231 distinct from an infrared dryer 232, and the hot air dryer 231 may be arranged downstream the infrared dryer 232. The converting unit 200 further comprises creasing station 240 configured to provide a crease line pattern to the paperboard layer 130, and at least one lamination station 250 configured to laminate at least a further layer 110, 120, 160 to the printed and creased paperboard layer 130. The stations comprised in the converting unit 200 may be arranged in the following order, upstream to downstream: ink-jet printer 220, drying station 230, creasing station 240, lamination station 250. At least one feeding unit 210, in Fig. 3 illustrated as two feeding units, may further be comprised in the converting unit 200. The feeding unit(s) 210 may be configured to continuously forward the paperboard layer 130 at a constant speed, preferably in the machine direction. The converting unit (200) may also comprise a print substrate station (not shown), in parallel to the method explained before, before the ink-jet printer (220).

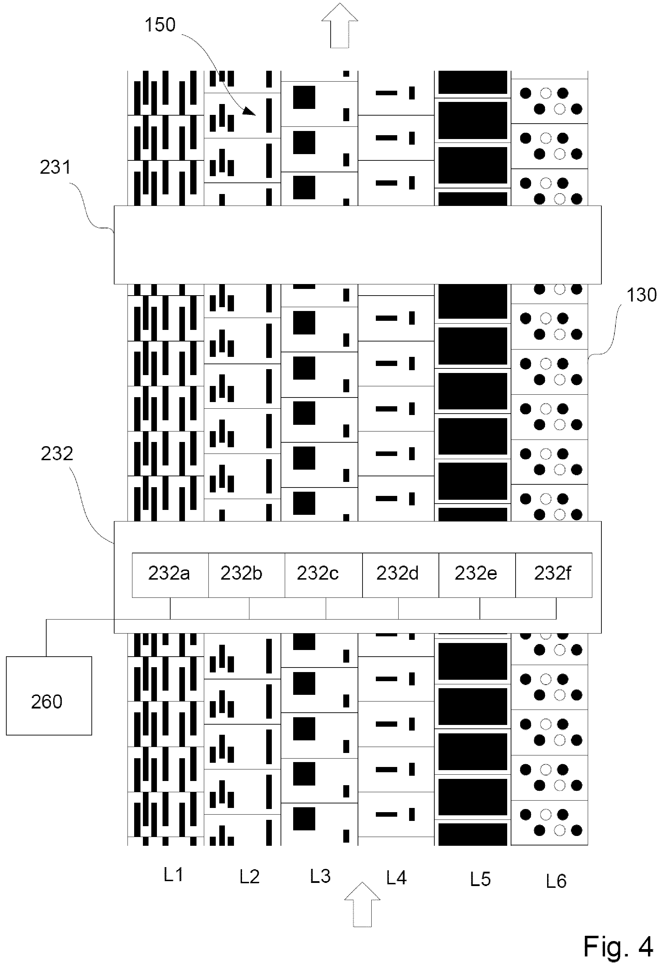

Now turning to Fig. 4 an example of a paperboard layer 130 is shown, which has been provided with an ink-jet printed décor layer 150. The paperboard layer 130 has a certain width corresponding to six lanes L1-L6. Each lane L1-L6 corresponds to a specific width for a resulting packaging container. After the converting process, the laminated packaging material web 100 is cut to separate the lanes L1-L6, such that each lane L1-L6 of the laminated packaging material web 100 can be fed to a filling and forming machine in order to produce individual packaging containers.

Each lane L1-L6 is printed with a décor layer 150, corresponding to the final design of the packaging container. The infrared dryer 232 is arranged across the paperboard layer 130. In the shown example the infrared dryer 232 comprises a plurality of dryers 232a-f. Although not required, the number of dryers may correspond to the number of lanes L1-L6 of the paperboard layer 130. The hot air dryer 231 is arranged downstream the IR dryer 232.

A controller 260 may be programmed to control the operation of the individual dryers 232a-f. Depending on the décor layer, each dryer 232a-f may be controlled individually to provide a desired level of IR radiation such that absorption by the paperboard layer 130 is minimized.

From the description above follows that, although various embodiments of the invention have been described and shown, the invention is not restricted thereto, but may also be embodied in other ways within the scope of the subject-matter defined in the following claims.

## Claims

1. A continuous in-line method for manufacturing a laminated packaging material web (100) for liquid food packaging containers, comprising:
ink-jet printing (S20) a décor layer (150) on a paperboard layer (130),
drying (S30) the décor layer (150) by exposing the paperboard layer (130) to infrared radiation (IR) and a flow of hot air (HA),
controlling the moisture content of the paperboard layer by adjusting the ratio between the power, spectral emission, radiation intensity, or time of exposure of the infrared radiation and the flow of hot air, and
laminating (S50) at least a further layer (110, 120, 160) to the printed paperboard layer (130).

2. The method according to claim 1, further comprising applying (S10) a print substrate layer (140) to said paperboard layer (130) prior to ink-jet printing (S20) the décor layer (150).

3. The method according to claim 1 or 2, further comprising providing (S40) a crease line pattern to said paperboard layer (130).

4. The method according to claim 3, further comprising repeating the crease line pattern in a machine direction.

5. The method according to any of the preceding claims, wherein the paperboard layer (130) is transported along a machine direction at a substantially constant speed.

6. The method according to any of the preceding claims, wherein drying (S30) the décor layer (150) further comprises controlling the moisture content of the paperboard layer (130) by adjusting the temperature of the flow of hot air (HA).

7. The method according to the any of the preceding claims, wherein controlling the moisture level comprises determining a drying time by minimizing the amount of infrared radiation (IR) while still ensuring complete drying within the drying time.

8. The method according to the any of the preceding claims, wherein drying (S30) the décor layer (150) is performed by exposing an area of the paperboard layer (130) to infrared radiation (IR), and subsequently exposing the same area of the paperboard layer (130) to the flow of hot air (HA).

9. The method according to any of the preceding claims, wherein the infrared radiation (IR) has a spectral emission within 0.4 µm - 4 µm.

10. A converting unit (200) configured to manufacture a laminated packaging material web (100) for liquid food packaging containers, comprising an ink-jet printer (220) configured to print a décor layer (150) on the paperboard layer (130), a drying station (230) configured to dry the décor layer (150) by exposing the paperboard layer (130) to infrared radiation (IR) and a flow of hot air (HA), configured to control the moisture content of the paperboard layer by adjusting the ratio between the power, spectral emission, radiation intensity, or time of exposure of the infrared radiation and the flow of hot air, and at least one lamination station (250) configured to laminate at least a further layer (110, 120, 160) to the printed paperboard layer (130).

11. The converting unit (200) according to claim 10, wherein further comprising a creasing station (240) configured to provide a crease line pattern to the paperboard layer (130).

12. The converting unit (200) according to claim 10 or 11, wherein the drying station (230) comprises a hot air dryer (231) distinct from an infrared dryer (232), and wherein the hot air dryer (231) is arranged downstream the infrared dryer (232).

## Patentansprüche

1. Kontinuierliches In-Line-Verfahren zum Herstellen einer laminierten Verpackungsmaterialbahn (100) für Verpackungsbehälter für flüssige Lebensmittel, Folgendes umfassend:
Tintenstrahldrucken (S20) einer Dekorschicht (150) auf einer Kartonschicht (130),
Trocknen (S30) der Dekorschicht (150), indem die Kartonschicht (130) Infrarotstrahlung (IR) und einem Heißluftstrom (HA) ausgesetzt wird,
Steuern des Feuchtigkeitsgehalts der Kartonschicht durch Einstellen des Verhältnisses zwischen der Leistung, der spektralen Emission, der Strahlungsintensität oder der Einwirkdauer der Infrarotstrahlung und des Heißluftstroms und
Laminieren (S50) mindestens einer weiteren Schicht (110, 120, 160) auf die bedruckte Kartonschicht (130).

2. Verfahren nach Anspruch 1, weiterhin umfassend Aufbringen (S10) einer Drucksubstratschicht (140) auf die Kartonschicht (130) vor Tintenstrahldrucken (S20) der Dekorschicht (150).

3. Verfahren nach Anspruch 1 oder 2, weiterhin umfassend Bereitstellen (S40) eines Faltlinienmusters auf der Kartonschicht (130).

4. Verfahren nach Anspruch 3, weiterhin umfassend Wiederholen des Faltlinienmusters in einer Maschinenrichtung.

5. Verfahren nach einem der vorhergehenden Ansprüche, wobei die Kartonschicht (130) mit einer im Wesentlichen konstanten Geschwindigkeit entlang einer Maschinenrichtung transportiert wird.

6. Verfahren nach einem der vorhergehenden Ansprüche, wobei Trocknen (S30) der Dekorschicht (150) weiterhin Steuern des Feuchtigkeitsgehalts der Kartonschicht (130) durch Einstellen der Temperatur des Heißluftstroms (HA) umfasst.

7. Verfahren nach einem der vorhergehenden Ansprüche, wobei Steuern des Feuchtigkeitsgehalts Bestimmen einer Trocknungsdauer durch Minimieren der Menge an Infrarotstrahlung (IR) umfasst, während noch vollständiges Trocknen innerhalb der Trocknungsdauer sichergestellt wird.

8. Verfahren nach einem der vorhergehenden Ansprüche, wobei Trocknen (S30) der Dekorschicht (150) durchgeführt wird, indem ein Bereich der Kartonschicht (130) Infrarotstrahlung (IR) ausgesetzt wird und anschließend der gleiche Bereich der Kartonschicht (130) dem Heißluftstrom (HA) ausgesetzt wird.

9. Verfahren nach einem der vorhergehenden Ansprüche, wobei die Infrarotstrahlung (IR) eine spektrale Emission innerhalb von 0,4 µm bis 4 µm aufweist.

10. Umwandlungseinheit (200), die eingerichtet ist, um eine laminierte Verpackungsmaterialbahn (100) für Verpackungsbehälter für flüssige Lebensmittel herzustellen, umfassend einen Tintenstrahldrucker (220), der eingerichtet ist, um eine Dekorschicht (150) auf die Kartonschicht (130) zu drucken, eine Trocknungsstation (230), die eingerichtet ist, um die Dekorschicht (150) zu trocknen, indem die Kartonschicht (130) Infrarotstrahlung (IR) und einem Heißluftstrom (HA) ausgesetzt wird, die eingerichtet sind, um den Feuchtigkeitsgehalt der Kartonschicht zu steuern, indem das Verhältnis zwischen der Leistung, der spektralen Emission, der Strahlungsintensität oder der Einwirkdauer der Infrarotstrahlung und des Heißluftstroms eingestellt wird, und mindestens eine Laminierungsstation (250), die eingerichtet ist, um mindestens eine weitere Schicht (110, 120, 160) auf die bedruckte Kartonschicht (130) zu laminieren.

11. Umwandlungseinheit (200) nach Anspruch 10, weiterhin umfassend eine Faltstation (240), die eingerichtet ist, um ein Faltlinienmuster auf der Kartonschicht (130) bereitzustellen.

12. Umwandlungseinheit (200) nach Anspruch 10 oder 11, wobei die Trocknungsstation (230) einen Heißlufttrockner (231) umfasst, der von einem Infrarottrockner (232) verschieden ist, und wobei der Heißlufttrockner (231) dem Infrarottrockner (232) nachgeordnet angeordnet ist.

## Revendications

1. Procédé en ligne continu destiné à fabriquer une bande de matériau d'emballage stratifiée (100) pour récipients d'emballage d'aliments liquides, comprenant :
l'impression par jet d'encre (S20) d'une couche décorative (150) sur une couche de carton (130),
le séchage (S30) de la couche décorative (150) par exposition de la couche de carton (130) à un rayonnement infrarouge (IR) et un flux d'air chaud (HA),
la régulation du taux d'humidité de la couche de carton par ajustement du rapport entre la puissance, l'émission spectrale, l'intensité du rayonnement et le temps d'exposition du rayonnement infrarouge et du flux d'air chaud, et
la stratification (S50) d'au moins une autre couche (110, 120, 160) sur la couche de carton imprimée (130).

2. Procédé selon la revendication 1, comprenant en outre l'application (S10) d'une couche de substrat d'impression (140) à ladite couche de carton (130) avant l'impression par jet d'encre (S20) de la couche décorative (150).

3. Procédé selon la revendication 1 ou 2, comprenant en outre la création (S40) d'un motif de lignes de pli dans ladite couche de carton (130).

4. Procédé selon la revendication 3, comprenant en outre la répétition du motif de lignes de pli dans un sens machine.

5. Procédé selon l'une quelconque des revendications précédentes, dans lequel la couche de carton (130) est transportée dans un sens machine à une vitesse sensiblement constante.

6. Procédé selon l'une quelconque des revendications précédentes, dans lequel le séchage (S30) de la couche décorative (150) comprend en outre la régulation du taux d'humidité de la couche de carton (130) par ajustement de la température du flux d'air chaud (HA).

7. Procédé selon l'une quelconque des revendications précédentes, dans lequel la régulation du taux d'humidité comprend la détermination d'un temps de séchage par minimisation de la quantité de rayonnement infrarouge (IR) tout en assurant encore un séchage complet dans le temps de séchage.

8. Procédé selon l'une quelconque des revendications précédentes, dans lequel le séchage (S30) de la couche décorative (150) est effectué par exposition d'une zone de la couche de carton (130) au rayonnement infrarouge (IR), puis exposition de la même zone de la couche de carton (130) au flux d'air chaud (HA).

9. Procédé selon l'une quelconque des revendications précédentes, dans lequel le rayonnement infrarouge (IR) présente une émission spectrale dans la plage de 0,4 µm - 4 µm.

10. Unité de transformation (200) conçue pour fabriquer une bande de matériau d'emballage stratifiée (100) pour récipients d'emballage d'aliments liquides, comprenant une imprimante à jet d'encre (220) conçue pour imprimer une couche décorative (150) sur la couche de carton (130), un poste de séchage (230) conçu pour sécher la couche décorative (150) en exposant la couche de carton (130) à un rayonnement infrarouge (IR) et un flux d'air chaud (HA), conçu pour réguler le taux d'humidité de la couche de carton en ajustant le rapport entre la puissance, l'émission spectrale, l'intensité du rayonnement et le temps d'exposition du rayonnement infrarouge et du flux d'air chaud, et au moins un poste de stratification (250) conçu pour stratifier au moins une autre couche (110, 120, 160) sur la couche de carton imprimée (130).

11. Unité de transformation (200) selon la revendication 10, comprenant en outre un poste de rainage (240) conçu pour créer un motif de lignes de pli dans la couche de carton (130).

12. Unité de transformation (200) selon la revendication 10 ou 11, dans laquelle le poste de séchage (230) comprend un séchoir à air chaud (231) distinct d'un séchoir infrarouge (232), et dans laquelle le séchoir à air chaud (231) est disposé en aval du séchoir infrarouge (232).
